# EUROPEAN PATENT APPLICATION

(11) **EP 3 133 803 A1**
(43) Date of publication of application: **22.02.2017**
(21) Application number: 16183405.6
(22) Date of filing: 09.08.2016
(51) Int. Cl.: H04N 1/32

(54) **RECORDING MEDIUM, INFORMATION TERMINAL, AND COMMUNICATION SYSTEM**

(30) Priority: 18.08.2015 JP 2015161424
(71) Applicant: Ricoh Company, Ltd., Tokyo 143-8555 (JP)
(72) Inventor: OE, Takayasu, Tokyo, 143-8555 (JP)
(74) Representative: Schwabe - Sandmair - Marx

(57) **Abstract**

A non-transitory recording medium storing a computer-readable program that, when executed by an information terminal (40) in communication with a conference information processing device (20), causes the information terminal to function as a reception unit (44) receiving an instruction to select an input device and an output device registered in the conference information processing device; an input process requesting unit (461) sending, to the conference information processing device, a request to execute an input process by the input device selected; a determination unit (462) determining whether the conference information processing device receives data generated upon the execution of the input process by the input device; and an output process requesting unit (464) sending, to the conference information processing device, a request to execute an output process by the output device selected upon determination that the conference information processing device receives the data.

## Description

### BACKGROUND OF THE INVENTION

### 1. Field of the Invention

The present invention relates to a recording medium, an information terminal, and a communication system.

### 2. Description of the Related Art

With the spread of networks and communication technology, it is possible to use various types of devices connected to the networks. For example, it is possible to use connection between a Multifunction Peripheral/Printer/Product (MFP) and an information processing device such that image data on a document read by the MFP is transmitted to the information processing device and the image information processing device performs image processing and transmits a result of the image processing to the MFP.

Such processing is called distributed processing, cooperative processing, or the like. This processing can increase usage and improve convenience of a device connected to a network. As one example of the distributed processing, a technique by which an image processing device processes image data read by an MFP is proposed (see Patent Document 1, for example). Patent Document 1 discloses a system that performs an OCR (optical character recognition) process on image data read by the MFP.

It is an object of at least one embodiment of the present invention to provide a recording medium storing a computer-readable program by which a user can easily perform a cooperative process where a device for input and a device for output are combined.

### Related Art Documents

[Patent Document 1] Japanese Unexamined Patent Application Publication No. 2005-012670.

### SUMMARY OF THE INVENTION

In an embodiment, a non-transitory recording medium storing a computer-readable program is provided. The computer-readable program, when executed by an information terminal in communication with a conference information processing device, causes the information terminal to function as a reception unit configured to receive an instruction to select an input device and an output device, the reception unit being able to select the input device and the output device registered in advance in the conference information processing device; an input process requesting unit configured to send, to the conference information processing device, a request to execute an input process by the input device selected in the reception unit; a determination unit configured to determine whether the conference information processing device receives data generated upon the execution of the input process by the input device; and an output process requesting unit configured to send, to the conference information processing device, a request to execute an output process by the output device selected in the reception unit in response to the determination that the conference information processing device receives the data.

According to an embodiment of the present invention, it is possible to provide a non-transitory recording medium storing a computer-readable program that allows a user to easily perform a cooperative process based on a combination of a device for input and a device for output.

### BRIEF DESCRIPTION OF THE DRAWINGS

Other objects and further features of embodiments will become apparent from the following detailed description when read in conjunction with the accompanying drawings, in which:
FIG. 1A is a diagram illustrating an operation of a communication system according to an embodiment of the present invention;
FIG. 1B is a diagram illustrating an operation of a communication system according to an embodiment of the present invention;
FIG. 1C is a diagram illustrating an operation of a communication system according to an embodiment of the present invention;
FIG. 2 is a schematic configuration diagram of a communication system according to an embodiment of the present invention;
FIG. 3 is a hardware configuration diagram of a conference managing device according to an embodiment of the present invention;
FIG. 4 is a hardware configuration diagram of a smart device according to an embodiment of the present invention;
FIG. 5 is a hardware configuration diagram of a network connection controlling device according to an embodiment of the present invention;
FIG. 6 is a functional block diagram of a conference managing device, a network connection controlling device, and an information terminal included in a communication system according to an embodiment of the present invention;
FIG. 7 is a functional block diagram of a cooperative processing unit according to an embodiment of the present invention;
FIG. 8 is a sequence diagram depicting a procedure by which a host sends a request to start a conference (issue a passcode) to a conference managing device according to an embodiment of the present invention;
FIG. 9 is a sequence diagram depicting an operation performed by a conference managing device when a participant participates in a conference according to an embodiment of the present invention;
FIG. 10A is a sequence diagram depicting a procedure by which an information terminal is connected to a network connection controlling device according to an embodiment of the present invention;
FIG. 10B is a sequence diagram depicting a procedure by which an information terminal is connected to a network connection controlling device according to an embodiment of the present invention;
FIG. 11 is a sequence diagram depicting a procedure by which a host holds a conference after a participant participates in a conference according to an embodiment of the present invention;
FIG. 12 is a sequence diagram depicting a procedure by which a smart device causes a projector to project conference materials according to an embodiment of the present invention;
FIG. 13 is a diagram depicting a conference materials list screen according to an embodiment of the present invention;
FIG. 14 is a sequence diagram depicting a procedure by which an attendee specifies an input device and an output device to execute a job according to an embodiment of the present invention;
FIG. 15A is a diagram depicting a setting screen of input and output jobs displayed on a smart device according to an embodiment of the present invention;
FIG. 15B is a diagram depicting a setting screen of input and output jobs displayed on a smart device according to an embodiment of the present invention;
FIG. 16 is a sequence diagram depicting a procedure by which an attendee specifies an input device and an output device to execute a job according to an embodiment of the present invention;
FIG. 17 is a sequence diagram depicting a process procedure by which a conference managing device processes image data of an input device before an output device outputs according to an embodiment of the present invention;
FIG. 18 is a flowchart depicting a process procedure of a progress determining unit according to an embodiment of the present invention; and
FIG. 19 is a diagram depicting a setting screen capable of setting processing.

### DESCRIPTION OF THE EMBODIMENTS

In the following, embodiments to carry out the present invention will be described with reference to the drawings.

### <Schematic structure of communication system>

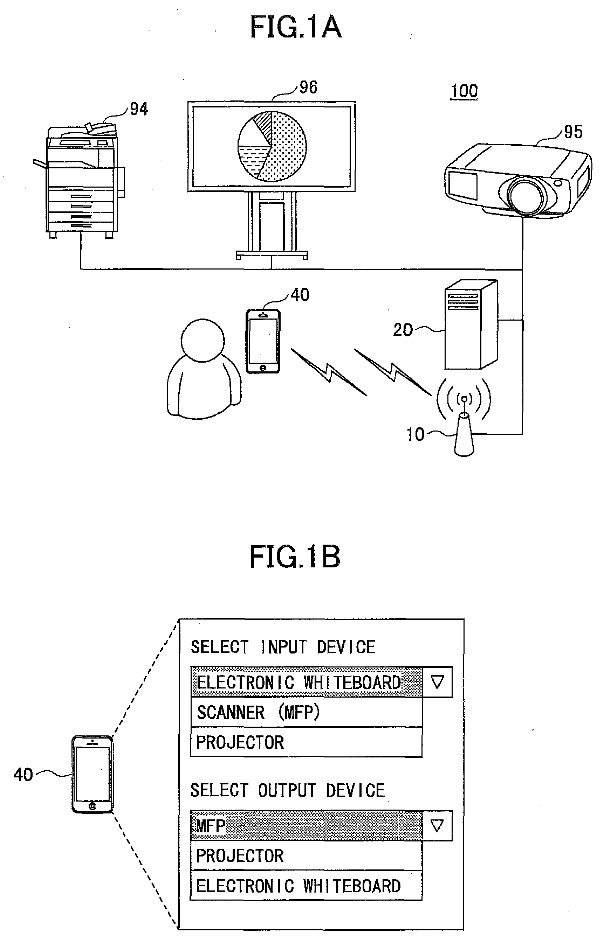

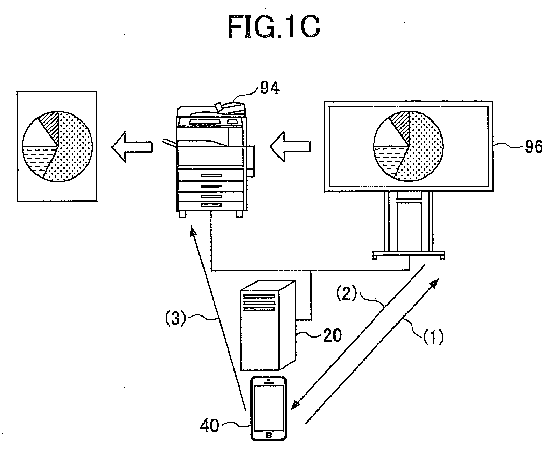

FIGs. 1A, 1B, and 1C are diagrams illustrating an operation of a communication system 100 according to an embodiment of the present invention. FIG. 1A depicts a schematic structure of the communication system 100, in which a projector 95, an electronic whiteboard 96, and a Multifunction Peripheral/Printer/Product (MFP) 94 are connected to a conference managing device 20. In the following, the projector 95, the electronic whiteboard 96, and the MFP 94 may be referred to as a "device" if not distinguished. An attendee of a conference operates an information terminal 40 to communicate with the conference managing device 20 via a network connection controlling device 10 and can operate these devices.

FIG. 1A illustrates a case where the electronic whiteboard 96 displays a pie chart and the pie chart is printed by the MFP 94. As illustrated in FIG. 1B, the attendee selects an input device and an output device from a screen displayed on the information terminal 40. The input device is for obtaining image data and the output device is for outputting the image data. There are cases where the projector 95, the electronic whiteboard 96, and the MFP 94 may be the input device and the output device.

From the screen of FIG. 1B, a user selects the electronic whiteboard 96 as the input device and selects the MFP 94 as the output device, for example. In accordance with this, the information terminal 40 receives the selection of the input device and the output device. The information terminal 40 sends a request for executing an input job to specify the input device and a request for executing an output job to specify the output device to the conference managing device 20 successively.
(1) First, as illustrated in FIG. 1C, the information terminal 40 sends the request for executing the input job to the conference managing device 20. The conference managing device 20 creates the input job as follows and causes the electronic whiteboard 96 to execute the input job.
   A. An input job to generate image data by capturing a display screen rendered by the electronic whiteboard 96.
(2) The information terminal 40 monitors whether image data is generated by sending an inquiry to the conference managing device 20.
(3) When the image data is generated (when the input job is complete), the information terminal 40 sends a request for executing an output job to the conference managing device 20. The conference managing device 20 creates the output job as follows and causes the MFP 94 to execute the output job.
   B. A job to print the image data generated by the electronic whiteboard 96.

In accordance with this, the MFP 94 can print the display screen rendered by the electronic whiteboard 96 on paper. Thus, according to the communication system 100 of the embodiment, the attendee can determine an arbitrary combination from input devices and output devices and obtain an output result. The attendee need not be aware of presence of image data or operate a file. Further, because the conference managing device 20 basically has a function of operating one device, it is possible to use the function to operate two devices in cooperation. Accordingly, when the information terminal 40 communicates with the conference managing device 20 and sends an instruction to execute a job, it is possible to operate devices in cooperation without greatly changing functions of the conference managing device 20.

### <As to terms>

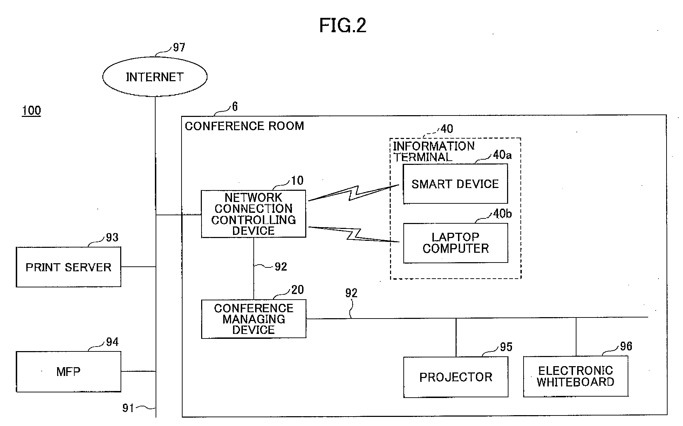

In the following, terms used in this embodiment are described.
- Host: a person who performs an operation to start a conference. In addition to the starting of the conference, the host can hold the conference, permit participation in the conference, suspend the conference, and remove a participant, for example.
- Participant: a person who participates in a conference other than the host. The participant can exit.
- Attendee: the host and the participant are simply called attendees if they are not distinguished.
- Location: a place where a participant is present or participants gather. For example, if a conference is held in a single conference room 6 (as will be described in FIG. 2), the location corresponds to this conference room 6. If the single conference room 6 cannot accommodate participants, each of conference rooms is called a corresponding location. Further, if a conference is held at geographically remote places, each of the geographically remote places is called a corresponding location. If a single conference is held in separate conference rooms, a conference managing device in each of the separate conference rooms performs communication to transmit and receive an image to be projected by the projector 95 or an image to be displayed by an electronic whiteboard 96. Accordingly, attendees of the separate conference rooms can see the same image.
- Starting a conference: registration of a conference such as issuing a passcode.
- Participation: logging into the conference managing device 20 by the information terminal 40 using a passcode.
- Holding a conference: one of operations performed by the host. In accordance with this, the information terminal 40 can access conference materials or a device.
- Ending a conference: one of operations performed by the host. In accordance with this, the information terminal 40 cannot access conference materials or the device.

### <System configuration>

FIG. 2 is a schematic configuration diagram of the communication system 100 according to the embodiment of the present invention. The communication system 100 mainly includes a conference network 92 and a shared network 91. The conference network 92 is built in the conference room 6 and the shared network 91 is built outside the conference room 6 and is connected to the Internet 97, for example. Both of the conference network 92 and the shared network 91 may be a Local Area Network (LAN) but each may further include a plurality of LANs. A smart device 40a and a laptop computer 40b are examples of the information terminal 40. The information terminal 40 wirelessly communicates with the network connection controlling device 10. The information terminal 40 may have a function of wired communication. The information terminal 40 is used to refer to conference materials or operate a device. Further, the information terminal 40 is used for display of a participant list, a removal or exit operation, and the like.

The information terminal 40 may be the smart device 40a or the laptop computer 40b. These are only examples. The reason for presenting two types of devices as the information terminal 40 is that there are various communication methods installed on the information terminal 40. In this embodiment, the smart device 40a can perform wireless communication in at least two communication methods and the laptop computer 40b can perform wireless communication in one communication method as an example of description.

One communication method of the smart device 40a is a communication method capable of communicating minimum information in a simplified manner while the communication method is not suitable for high-speed communication. Examples of such a communication method include Bluetooth (registered trademark), Near Field Communication (NFC) (registered trademark), Zigbee (registered trademark), and infrared communication. Examples of another communication method of the smart device 40a include a wireless LAN, mobile phone communication, and Worldwide Interoperability for Microwave Access (WiMAX), which are suitable for high-speed communication.

In the following description, it is assumed that the smart device 40a communicates with the conference managing device 20 via an application and the laptop computer 40b communicates with the conference managing device 20 via a browser. This is also for convenience sake of description. The smart device 40a may communicate via a browser or the laptop computer 40b may communicate via an application.

The smart device 40a is a general term of an information processing apparatus configured to be easily portable for a user. The smart device 40a may be a smartphone (multifunction phone terminal) having a phone function, a tablet computer focusing on information processing, or the like. Other examples of the smart device 40a include a wearable terminal (heads-up display, wristwatch terminal, and the like), a mobile phone, a Personal Digital Assistant (PDA), a digital camera, and the like. However, the smart device 40a is not limited to these devices. The laptop computer 40b refers to a small Personal Computer (PC) such as a notebook or a laptop. As described above, the difference between the smart device 40a and the laptop computer 40b is only for convenience sake of description.

A print server 93 and the MFP 94 connected to the shared network 91 are examples of devices that are frequently used at a conference. The print server 93 and the MFP 94 may be located within the conference room 6.

The projector 95 and the electronic whiteboard 96 connected to the conference network 92 are examples of devices disposed in the conference room 6 and frequently used at a conference. The projector 95 is used by an attendee to project conference materials, for example. The electronic whiteboard 96 is used to display the conference materials or display handwriting information indicating handwriting of the attendee. In addition, a printer, a FAX machine, a copier, or the like may be disposed as a device in the conference room 6. Further, the devices are not necessarily required to hold a conference.

The network connection controlling device 10 has functions of a communication interface and an access point of a wireless LAN for the information terminal 40 to perform wireless communication and a function of a router that controls data exchange between the conference network 92 and the shared network 91. Further, the network connection controlling device 10 has a function of limiting communication with the conference managing device 20 performed by the information terminal 40.

The conference managing device 20 controls the network connection controlling device 10, saves or deletes conference materials, performs input or output to a device, and manages attendees at a conference, for example. Further, the conference managing device 20 has a function of a Web server for the information terminal 40. Specifically, the conference managing device 20 authenticates participants via a passcode, registers participant information, transmits a participant list, and receives removal of an unscheduled participant, for example.

The network connection controlling device 10, the conference managing device 20, the projector 95, and the electronic whiteboard 96 are disposed in a single conference room 6. If there is a plurality of conference rooms 6, the network connection controlling device 10, the conference managing device 20, the projector 95, and the electronic whiteboard 96 are disposed in each conference room 6.

Further, if another conference room 6 is connected via the Internet 97 or the shared network 91, the other conference room 6 and the conference room 6 illustrated in FIG. 2 may belong to the same conference. In this case, information terminals 40 in the two conference rooms 6 can access corresponding conference managing devices 20 and refer to conference materials, for example.

### <Hardware configuration>

### <<Conference managing device 20>>

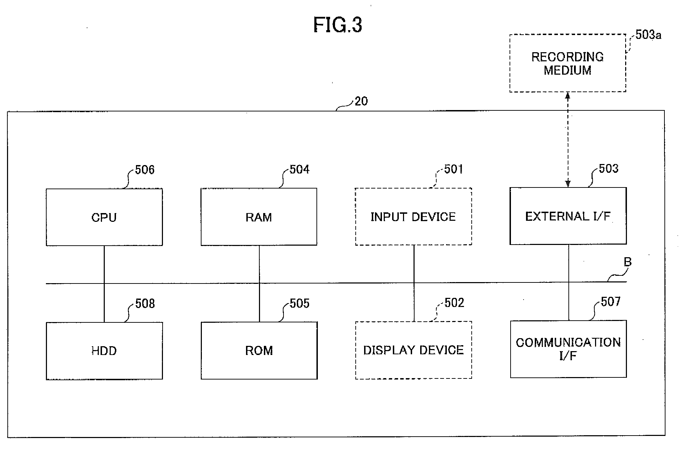

FIG. 3 is a hardware configuration diagram of the conference managing device 20 according to the embodiment of the present invention. The conference managing device 20 includes an input device 501, a display device 502, an external interface (I/F) 503, a RAM 504, a ROM 505, a CPU 506, a communication I/F 507, a Hard Disk Drive (HDD) 508, and the like. These elements are interconnected via a bus B. In addition, the input device 501 and the display device 502 may be connected and used when necessary.

The input device 501 includes a keyboard, a mouse, a touch panel, and the like. The input device 501 is used by the user to input an operation signal. The display device 502 includes a display screen and the like. The display device 502 displays a result of processing performed by the conference managing device 20.

The communication I/F 507 is an interface to connect the conference managing device 20 to various types of networks. In accordance with this, the conference managing device 20 can perform data communication via the communication I/F 507.

The HDD 508 is an example of a non-volatile storage device that stores a program and data. Examples of the program and data to be stored include an Operating System (OS) which is basic software to control the whole part of the conference managing device 20, application software (hereafter simply called "application") that provides various types of functions on the OS, and the like. In addition, the conference managing device 20 may employ a drive device (such as a Solid State Drive (SSD)) using a flash memory as a recording medium instead of the HDD 508.

The external I/F 503 is an interface for an external device. Examples of the external device include a recording medium 503a. In accordance with this, the conference managing device 20 can read from or write into the recording medium 503a via the external I/F 503. Examples of the recording medium 503a include a flexible disk, a CD, a DVD, an SD card, a USB memory, and the like.

The ROM 505 is an example of a non-volatile semiconductor memory (storage device) that can hold a program and data even in a powered-off state. The ROM 505 stores a Basic Input-Output System (BIOS) executed when the conference managing device 20 starts up, OS settings, a program such as network settings, data, and the like. The RAM 504 is an example of a volatile semiconductor memory (storage device) that temporarily holds a program and data.

The CPU 506 is an arithmetic unit that controls the whole part of the conference managing device 20 and implements functions thereof by reading out a program and data from a storage device such as the ROM 505 or the HDD 508 to the RAM 504 and executing a process.

In addition, the hardware configuration of the conference managing device 20 as illustrated in FIG. 3 need not be housed in a single case or provided as an integrated device. The hardware configuration indicates hardware elements that are preferably included in the conference managing device 20. Further, the physical configuration of the conference managing device 20 in this example may not be fixed in order to support cloud computing. The conference managing device 20 may be configured by dynamically coupling or disconnecting hardware resources depending on a load.

### <<Smart device 40a>>

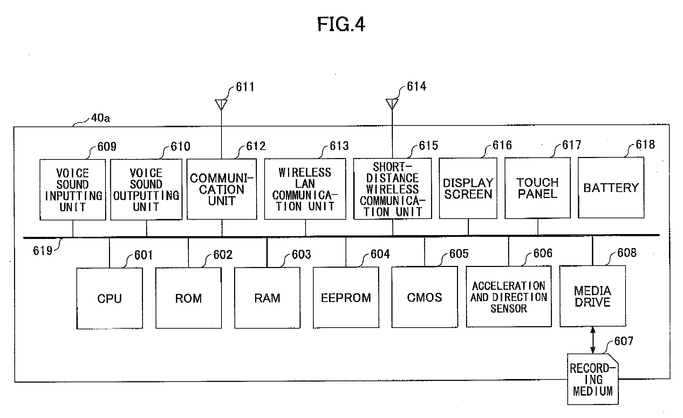

FIG. 4 is a hardware configuration diagram of the smart device 40a according to the embodiment of the present invention. The smart device 40a in FIG. 4 includes a CPU 601, a ROM 602, a RAM 603, an Electrically Erasable Programmable Read-Only Memory (EEPROM) 604, a CMOS sensor 605, an acceleration and direction sensor 606, and a media drive 608.

The CPU 601 controls the whole part of operations of the smart device 40a. The ROM 602 stores a basic input-output program. The RAM 603 is used as a work area of the CPU 601. The EEPROM 604 reads or writes data in accordance with control of the CPU 601. The CMOS sensor 605 captures an image of a photographic subject in accordance with control of the CPU 601 and obtains image data. The acceleration and direction sensor 606 may be an electromagnetic compass that detects geomagnetism, a gyrocompass, an acceleration sensor, or the like.

The media drive 608 controls reading or writing (storing) of data from or into a recording medium 607 such as a flash memory. The media drive 608 is configured to hold the recording medium 607 in a removable manner, in which data already recorded is read out from the recording medium 607 or data is newly written and stored in the recording medium 607.

In addition, the EEPROM 604 stores an OS to be executed by the CPU 601, association information necessary for network settings, and the like. An application to execute various types of processes in the embodiment of the present invention is stored in the EEPROM 604 or the recording medium 607, for example.

Further, the CMOS sensor 605 is a charge-coupled device that converts light into an electric charge and electronically processes an image of a photographic subject. The CMOS sensor 605 may be a Charge Coupled Device (CCD) sensor, for example, as long as an image of the photographic subject can be captured.

Further, the smart device 40a also includes a voice sound inputting unit 609, a voice sound outputting unit 610, an antenna 611, a communication unit 612, a wireless LAN communication unit 613, a short-distance wireless communication antenna 614, a short-distance wireless communication unit 615, a display screen 616, a touch panel 617, and a bus line 619.

The voice sound inputting unit 609 converts voice sound into a voice sound signal. The voice sound outputting unit 610 converts a voice sound signal into voice sound. The communication unit 612 uses the antenna 611 to communicate with the nearest base station device through wireless communication signals. The wireless LAN communication unit 613 performs wireless LAN communication with an access point, the wireless LAN communication being compliant with the IEEE 802.11 standard. The short-distance wireless communication unit 615 uses the short-distance wireless communication antenna 614 to perform short-distance wireless communication.

The display screen 616 includes liquid crystal, organic EL, or the like that displays an image of a photographic subject and various types of icons. The touch panel 617 is placed on the display screen 616 and is configured with a pressure sensitive or electrostatic panel. The touch panel 617 detects a touched location on the display screen 616 in response to touch by the finger, a touch pen, or the like. The bus line 619 may be an address bus, a data bus, or the like that electrically connects the above units.

The smart device 40a includes a dedicated battery 618. The smart device 40a is driven by the battery 618. In addition, the voice sound inputting unit 609 includes a microphone for inputting voice sound. The voice sound outputting unit 610 includes a loudspeaker for outputting voice sound.

The smart device 40a can implement various types of processes to be described later in accordance with the hardware configuration illustrated in FIG. 4, for example. In addition, although hardware of the laptop computer 40b is different from the hardware of the smart device 40a in that the short-distance wireless communication unit 615 is not included, it is assumed that this difference does not have an influence on the description of this embodiment.

### <<Network connection controlling device>>

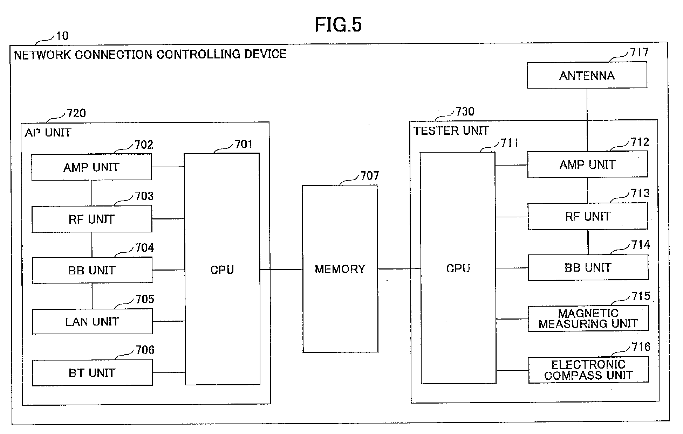

FIG. 5 is a hardware configuration diagram of the network connection controlling device 10 according to the embodiment of the present invention. The network connection controlling device 10 includes an Access Point (AP) unit 720 that controls data communication in a normal mode, a tester unit 730 that measures a radio wave state in a measurement mode, a memory 707 that stores a Media Access Control (MAC) address of the information terminal 40 in communication and other information, and an antenna 717. The measurement mode is a mode for measuring a radio wave state. The normal mode is different from the measurement mode and is a mode for communicating with the information terminal 40.

The AP unit 720 includes an Amplifier (AMP) unit 702, a Radio Frequency (RF) unit 703, a Base Band (BB) unit 704, a LAN unit 705, a Bluetooth (registered trademark) (BT) unit 706, and a CPU 701. The AMP unit 702 amplifies a signal output from the RF unit 703 and communicates with the information terminal 40 via a wireless LAN. Further, the AMP unit 702 receives a signal of the wireless LAN from the information terminal 40, changes a reception level, and outputs the changed signal to the RF unit 703.

The RF unit 703 performs analog-digital conversion on a signal to be transmitted to the information terminal 40 and a signal received from the information terminal 40. The BB unit 704 performs digital signal processing on a signal to be transmitted to the information terminal 40 and a signal received from the information terminal 40.

The LAN unit 705 is connected to the conference network 92 and the shared network 91 in a wired manner and performs data transmission and reception. The CPU 701 controls the AMP unit 702, the RF unit 703, the BB unit 704, the LAN unit 705, and the BT unit 706. The CPU 701 reads or writes data from or into the memory 707, the data being necessary for controlling communication of data with the information terminal 40.

The BT unit 706 communicates with the information terminal 40 (smart device 40a) via Bluetooth and transmits connection information to the information terminal 40 as will be described below. In addition, the BT unit 706 may be disposed outside the network connection controlling device 10. The BT unit 706 may perform communication in either standard, namely, Bluetooth LE or normal Bluetooth. Further, the BT unit 706 may perform communication via NFC, infrared, or the like.

The AP unit 720 includes two sets of hardware (the AMP unit 702, the RF unit 703, and the BB unit 704) to communicate with the information terminal 40 via a wireless LAN. Each set is for one channel of communication. When switching from the measurement mode to the normal mode, the network connection controlling device 10 selects a channel having a better radio wave state. Upon switching, the network connection controlling device 10 performs the channel switching by setting a new channel to be selected for hardware that is not currently used in order to prevent momentary stop of communication resulting from the channel switching.

For example, it is assumed that the AP unit 720 uses the AMP unit 702, the RF unit 703, and the BB unit 704 to communicate with the information terminal 40 via the wireless LAN and when the mode is switched to the measurement mode, a channel capable of communication is changed. Before returning to the normal mode, the AP unit 720 changes setting to perform communication in a new channel for the AMP unit 702, the RF unit 703, and the BB unit 704 that are not currently used, and then returns to the normal mode.

The tester unit 730 includes an AMP unit 712, an RF unit 713, a BB unit 714, a magnetic measuring unit 715, an electronic compass unit 716, and a CPU 711. The AMP unit 712, the RF unit 713, and the BB unit 714 are disposed as many as the number of areas of the wireless LAN. For example, if there are 18 areas, each of the numbers of the AMP units 712, the RF units 713, and the BB units 714 is 18. Communication in a single area is measured by the AMP unit 712, the RF unit 713, and the BB unit 714.

The AMP unit 712, the RF unit 713, and the BB unit 714 of the tester unit 730 have the same functions as in the AMP unit 702, the RF unit 703, and the BB unit 704 of the AP unit 720, so that a detailed description thereof is omitted.

The magnetic measuring unit 715 measures magnetism. The electronic compass unit 716 detects a direction of geomagnetism if the magnetism measured by the magnetic measuring unit 715 is approximately the same value as the geomagnetism (about 300 nG in proximity to the equator, about 600 nG in proximity to the north pole and the south pole, and about 500 nG in Japan). For example, if the magnetism measured by the magnetic measuring unit 715 is different from the value of the geomagnetism due to an influence of an electronics device located nearby, the electronic compass unit 716 manually receives the direction of a location. The electronic compass unit 716 detects in which direction the network connection controlling device 10 is located relative to the detected geomagnetism or the received direction.

The CPU 711 controls the AMP unit 712, the RF unit 713, the BB unit 714, the magnetic measuring unit 715, and the electronic compass unit 716. The CPU 711 reads or writes data from or into the memory 707, the data being necessary for measuring a location of the information terminal 40, a distance thereto, and the like. The CPU 711 determines whether an operation is performed in the normal mode or the measurement mode via the memory 707 and performs relevant processes.

The memory 707 stores data necessary for processing performed by the CPU 711. Further, the memory 707 has a MAC table in which information about the information terminal 40 is stored.

### <As to functions>

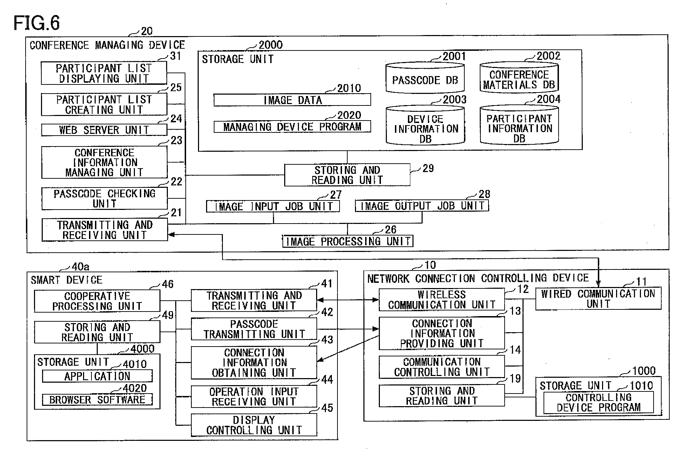

FIG. 6 is a functional block diagram of the conference managing device 20, the network connection controlling device 10, and the information terminal 40 included in the communication system 100 according to the embodiment of the present invention.

### <<Functional configuration of smart device 40a>>

The smart device 40a includes a transmitting and receiving unit 41, a passcode transmitting unit 42, a connection information obtaining unit 43, an operation input receiving unit 44, a display controlling unit 45, a cooperative processing unit 46, and a storing and reading unit 49. These units are functions or units which are implemented or provided when any one of the constituent elements illustrated in FIG. 4 operates in response to an instruction from the CPU 601 in accordance with an application 4010 (or browser software 4020) loaded in the RAM 603 from the EEPROM 604.

Further, the information terminal 40 also includes a storage unit 4000 constructed with the RAM 603, the ROM 602, and the EEPROM 604 illustrated in FIG. 4. The storage unit 4000 stores the application 4010 and the browser software 4020.

The transmitting and receiving unit 41 is implemented by an instruction from the CPU 601, the communication unit 612, the wireless LAN communication unit 613, and the like illustrated in FIG. 4. The transmitting and receiving unit 41 transmits and receives various types of data to and from the conference managing device 20 via the network connection controlling device 10.

The passcode transmitting unit 42 is implemented by an instruction from the CPU 601, the short-distance wireless communication unit 615, and the like illustrated in FIG. 4. The passcode transmitting unit 42 transmits a name, a passcode, and the like to the network connection controlling device 10.

The connection information obtaining unit 43 is implemented by an instruction from the CPU 601, the short-distance wireless communication unit 615, and the like illustrated in FIG. 4. The connection information obtaining unit 43 obtains, from the network connection controlling device 10, connection information to connect with the network connection controlling device 10 and the conference managing device 20.

**[Table 1]**

| | | | |
|---|---|---|---|
| Connection information | AP information | SSID | ABCDEFG |
| | | Encryption method | WEP |
| | | Password | XXXXXXXX |
| | Managing device network information | IP address | 192.168.1.1 |
| | | HTTP port number | 53080 |
| | | HTTPS port number | 530443 |

Table 1 schematically indicates connection information obtained by the connection information obtaining unit 43 from the network connection controlling device 10. The connection information has the "AP information" and the "managing device network information." The AP information is used for the smart device 40a to connect with an access point of the network connection controlling device 10. In other words, the AP information includes an SSID, a password, and the like required when accessing the access point. Further, a cryptographic algorithm supported by the access point is described.

The managing device network information includes an IP address of the conference managing device 20 and port numbers to be used, for example. The smart device 40a can connect with the network connection controlling device 10 and further connect with the conference managing device 20 by using the connection information.

Referring back to FIG. 6 for description, the operation input receiving unit 44 is implemented by an instruction from the CPU 601, the voice sound inputting unit 609, the touch panel 617, and the like illustrated in FIG. 4. The operation input receiving unit 44 receives various types of inputs from the user.

The display controlling unit 45 is implemented by an instruction from the CPU 601, the display screen 616, and the like illustrated in FIG. 4. The display controlling unit 45 causes the display screen 616 to display various types of UI screens in which screen information obtained from the conference managing device 20 is arranged on screen parts stored in advance. In addition, when the browser software 4020 operates in the smart device 40a, the display controlling unit 45 interprets the screen information described in HTML, JavaScript (registered trademark), or the like and causes display of the UI screen.

The cooperative processing unit 46 is implemented by an instruction from the CPU 601 and the like illustrated in FIG. 4. The cooperative processing unit 46 sends, to the conference managing device 20, a request for creating an input job with settings input by an attendee. Further, when the input job ends, the cooperative processing unit 46 sends a request for creating an output job to the conference managing device 20. Image data to be used in the output job is stored in the conference managing device 20 as a result of execution of the input job. Functions of the cooperative processing unit 46 are described in detail with reference to 7 below.

The storing and reading unit 49 is implemented by an instruction from the CPU 601, the RAM 603, the EEPROM 604, and the like illustrated in FIG. 4. The storing and reading unit 49 stores various types of data in the storage unit 4000 and reads out various types of data stored in the storage unit 4000.

### «Functional configuration of network connection controlling device 10»

The network connection controlling device 10 includes a wired communication unit 11, a wireless communication unit 12, a connection information providing unit 13, a communication controlling unit 14, and a storing and reading unit 19. These units are functions or units which are implemented or provided when any one of the constituent elements illustrated in FIG. 5 operates in response to an instruction from the CPU 701 or the CPU 711 in accordance with a controlling device program 1010 stored in the memory 707.

The network connection controlling device 10 also includes a storage unit 1000 constructed with the memory 707 illustrated in FIG. 5. The storage unit 1000 stores the controlling device program 1010.

### (Functions of network connection controlling device 10)

The wireless communication unit 12 is implemented by an instruction from the CPU 701 or the CPU 711, the AMP unit 702, the RF unit 703, the BB unit 704, and the like illustrated in FIG. 5. The wireless communication unit 12 transmits and receives various types of data to and from the information terminal 40.

The wired communication unit 11 is implemented by an instruction from the CPU 701 or the CPU 711, the LAN unit 705, and the like illustrated in FIG. 5. The wired communication unit 11 transmits and receives various types of data to and from each device (such as the print server 93 or the MFP 94) of the shared network 91 and each device (such as the conference managing device 20) of the conference network 92.

The connection information providing unit 13 is implemented by an instruction from the CPU 701 or the CPU 711, the BT unit 706, and the like illustrated in FIG. 5. The connection information providing unit 13 transmits connection information to the information terminal 40. If the connection information providing unit 13 performs transmission in Bluetooth LE, the network connection controlling device 10 corresponds to a peripheral and the information terminal 40 corresponds to a central. The connection information providing unit 13 periodically transmits an advertisement packet and the information terminal 40 receives the advertisement packet if the information terminal 40 approaches the network connection controlling device 10 within a predetermined distance. In accordance with this, the information terminal 40 detects presence of the connection information providing unit 13 in proximity to its own terminal and the information terminal 40 connects with the network connection controlling device 10. When the information terminal 40 connects with the network connection controlling device 10, the information terminal 40 obtains connection information described in characteristics, for example. In addition, the above predetermined distance is adjusted depending on radio field strength (RSSI). In this embodiment, the predetermined distance is about one meter or less. In accordance with this, only if the information terminal 40 is present in proximity to the network connection controlling device 10, the information terminal 40 can obtain the connection information.

Further, if the connection information providing unit 13 performs transmission in NFC, the information terminal 40 operates as an RF tag reader and reads connection information stored in an NFC tag.

The communication controlling unit 14 is implemented by an instruction from the CPU 701 or the CPU 711 and the like illustrated in FIG. 5. The communication controlling unit 14 limits communication from the shared network 91 for conference network 92 and limits communication from the conference network 92 for shared network 91.

The storing and reading unit 19 is implemented by an instruction from the CPU 701 or the CPU 711, the memory 707, and the like illustrated in FIG. 5. The storing and reading unit 19 stores various types of data in the storage unit 1000 and reads out various types of data stored in the storage unit 1000.

As for a functional block diagram of the laptop computer 40b, the laptop computer 40b does not include the passcode transmitting unit 42 or the connection information obtaining unit 43. This is because an attendee manually inputs a passcode and connection information.

### <<Functional configuration of conference managing device 20>>

The conference managing device 20 includes a transmitting and receiving unit 21, a passcode checking unit 22, a conference information managing unit 23, a Web server unit 24, a participant list creating unit 25, an image processing unit 26, an image input job unit 27, an image output job unit 28, a participant list displaying unit 31, and a storing and reading unit 29. These units are functions or units which are implemented or provided when any one of the constituent elements illustrated in FIG. 3 operates in response to an instruction from the CPU 506 in accordance with a managing device program 2020 loaded in the RAM 504 from the HDD 508.

Further, the conference managing device 20 also includes a storage unit 2000 constructed with the RAM 504, the ROM 505, and the HDD 508 illustrated in FIG. 3. The storage unit 2000 includes a passcode DB 2001, a conference materials DB 2002, a device information DB 2003, and a participant information DB 2004, and stores image data 2010 and the managing device program 2020.

**[Table 2]**

| Conference ID | Passcode |
|---|---|
| 001 | 0090 |
| 002 | 2335 |

Table 2 indicates an example of a passcode table constituting the passcode DB 2001. In the passcode table, a conference ID and a passcode are registered in an associated manner. The registration of the conference ID and the passcode in the passcode table means that the passcode has been issued for the conference. In addition, an attendee need not be aware of the conference ID.

**[Table 3]**

| Conference ID | File name | Owner | Path |
|---|---|---|---|
| 001 | 123.ppt | Taro | ¥...¥kaigi1¥ |
| | 234.doc | Jiro | ¥...¥kaigi1¥ |
| | 345.xls | Saburo | ¥...¥kaigi1¥ |

Table 3 indicates an example of a conference materials table constituting the conference materials DB 2002. In the conference materials DB 2002, conference materials that can be referenced by an attendee are registered. In the conference materials table, a conference ID, a file name, an owner, and a path are registered. The file name represents a file name of conference material and the path represents a storage place of a file. The owner represents the name of an attendee that transmitted the file to the conference materials DB 2002. In addition, the conference materials in the conference materials DB 2002 are deleted when a conference ends.

**[Table 4]**

| Device type | IP address | Functions | |
|---|---|---|---|
| MFP | 192.168.10.1 | Printing | Scanning |
| | | Color | 300 |
| | | Duplex printing | 400 |
| | | Stapling | 600 |
| | | Punching | Photo/ |
| | | A3/A4/A5/B4 | characters/ |
| | | | figure |
| Electronic whiteboard | 192.168.20.1 | ... | |
| Projector | 192.168.20.2 | ... | |

Table 4 indicates an example of a device information table constituting the device information DB 2003. In the device information DB 2003, devices connected to the conference network 92 or the shared network 91 are registered. In the device information table, a device type and an IP address are registered. As for the device type such as the MFP 94 for which the user can select a function, functions of the device are registered. For example, the MFP 94 supports printing functions including color, duplex printing, stapling, punching, and paper sizes of A3/A4/A5/B4. Further, the MFP 94 also supports scanning functions as a scanner device including resolutions of 300, 400, and 600 dpi and reading modes of a photo, characters, and a figure.

These functions are transmitted to the information terminal 40 and displayed on a screen rendered on the display screen 616 of the information terminal 40.

**[Table 5]**

| | Conference ID: 001 | Conference name: project A | Conference location: room A | | | | |
|---|---|---|---|---|---|---|---|
| Attendee ID | Name | Passcode | IP address | MAC address | Model number | Phone number | Mail address |
| 001 | Taro* | 0090 | 198.168.11.10 | ABCDEFG H | IOS, app | 03-1234-xxxx | ABC DEF1.c o,jp |
| 002 | Jiro | 0090 | 198.168.11.11 | ABCDEFGI | WINOS, browser | 03-1234-xxxx | ABC@ DEF2.c o,jp |
| 003 | Saburo | 0090 | 198.168.11.12 | ABCDEFGJ | IOS, browser | 03-1234-xxxx | ABC@ DEF3.c o,jp |

Table 5 indicates an example of a participant information table constituting the participant information DB 2004. One or more records in the participant information table are referred to as participant information. In the participant information table, participant information about a host and participants that participate in the conference are registered. In addition, even information about the host marked with "*" is also referred to as participant information.

The participant information table is identified by a conference ID. In the participant information table, a conference name and a conference location input by the host are registered. Further, one set of participant information has items of an attendee ID, a name, a passcode, an IP address, a MAC address, a model number, a phone number, and a mail address.

The attendee ID represents unique identification information for identifying an attendee. The attendee ID is assigned by the conference managing device 20. The name represents the name of an attendee, a user name, a nickname, or the like. The passcode represents symbols, numerical values, characters, or a combination thereof kept secret to participate in a conference. The passcode is common among attendees for a single conference. The IP address represents an IP address of the information terminal 40 (the IP address may be fixed or assigned by a DHCP server). The MAC address represents an address unique to the information terminal 40 in communication via a wireless LAN. The model number represents information for determining a client program operating on the information terminal 40. For example, an OS name, an application or a browser name, and a version thereof are registered. The model number is mainly referenced by the conference managing device 20 to transmit appropriate screen information. The phone number represents a phone number of the attendee. The mail address represents a mail address of the attendee. In addition, it is not necessary for the conference managing device 20 to obtain all of these items.

### (Functions of conference managing device 20)

The transmitting and receiving unit 21 is implemented by an instruction from the CPU 506, the communication I/F 507, and the like illustrated in FIG. 3. The transmitting and receiving unit 21 transmits and receives various types of data to and from the network connection controlling device 10, the projector 95, the electronic whiteboard 96, and the like. The transmitting and receiving unit 21 also communicates with the information terminal 40, the print server 93, and the MFP 94 via the network connection controlling device 10.

The passcode checking unit 22 determines whether a passcode transmitted by a participant to try to participate in a conference matches a passcode registered in the passcode table. If the passcodes match, the passcode checking unit 22 permits participation in the conference.

The conference information managing unit 23 is implemented by an instruction from the CPU 506 and the like illustrated in FIG. 3. The conference information managing unit 23 issues a passcode. Further, if an attendee transmits conference materials, the conference information managing unit 23 registers the conference materials in the conference materials DB 2002. Further, the conference information managing unit 23 manages holding, ending, suspending, and the like of a conference.

The Web server unit 24 is implemented by an instruction from the CPU 506 and the like illustrated in FIG. 3. The Web server unit 24 transmits screen information to be displayed on a screen to the information terminal 40. Examples of the screen information include a list of conference materials, the device information table, and the like. In addition, if the information terminal 40 operates the application 4010, the Web server unit 24 processes information for the application to create the screen information and if the information terminal 40 operates the browser software 4020, the Web server unit 24 processes information for the browser to create the screen information.

The participant list creating unit 25 is implemented by an instruction from the CPU 506 and the like illustrated in FIG. 3. The participant list creating unit 25 registers, in the participant information DB 2004, participant information about a participant permitted to participate in a conference.

The image input job unit 27 is implemented by an instruction from the CPU 506 and the like illustrated in FIG. 3. The image input job unit 27 obtains a request for creating an input job from the cooperative processing unit 46 and creates the input job. Then image input job unit 27 sends the input job to an input device, obtains the image data 2010 from the input device, and stores the image data 2010 in the storage unit 2000.

The image processing unit 26 is implemented by an instruction from the CPU 506 and the like illustrated in FIG. 3. The image processing unit 26 performs an image process (processing) such as Optical Character Reader (OCR) or translation on the image data 2010 of storage unit 2000 and stores the image data 2010 subj ected to the image process in the storage unit 2000.

The image output job unit 28 is implemented by an instruction from the CPU 506 and the like illustrated in FIG. 3. The image output job unit 28 obtains a request for creating an output job from the cooperative processing unit 46 and uses the image data 2010 stored in the storage unit 2000 to create the output job. Then the image output job unit 28 sends the output job to the output device.

The participant list displaying unit 31 is implemented by an instruction from the CPU 506 and the like illustrated in FIG. 3. The participant list displaying unit 31 creates screen information about a participant list from the participant information table and transmits the screen information to the information terminal 40 of an attendee.

The storing and reading unit 29 is implemented by the CPU 506, the HDD 508, the RAM 504, the ROM 505, and the like illustrated in FIG. 3. The storing and reading unit 29 stores various types of data in the storage unit 2000 and reads out various types of data stored in the storage unit 2000.

**[Table 6]**

| (a) | |
|---|---|
| Input device | Electronic whiteboard |
| Job contents | S1. Capturing of display screen |
| | S2. Assigning a file name (***.jpg) |
| | S3. Transmission of image data |
| | |

| (b) | |
|---|---|
| Output device | Projector |
| Job step | S1. Projection of image data (***.jpg) |

Table 6-(a) indicates an example of an input job to be transmitted to the input device. Table 6-(a) indicates the input job if the input device is the electronic whiteboard 96. Job contents of the input job are described in a command code interpreted by the electronic whiteboard 96. If the electronic whiteboard 96 is the input device, capturing of a display screen, assigning a file name (***.jpg), and transmission of image data 2010 are successively performed. In addition, the file name may be unique (including an attendee ID and a job ID) as will be described later or any file name when assigned by the device.

Table 6-(b) indicates an example of an output job to be transmitted to the output device. Table 6-(b) indicates the output job if the output device is the projector 95. Job contents of the output job are described in a command code interpreted by the projector 95. If the projector 95 is the output device, projection of the image data 2010 is performed.

### (Functions of cooperative processing unit)

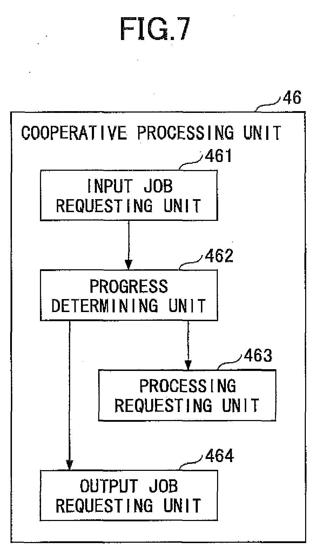

FIG. 7 is a functional block diagram of the cooperative processing unit 46 according to the embodiment of the present invention. The cooperative processing unit 46 includes an input job requesting unit 461, a progress determining unit 462, a processing requesting unit 463, and an output job requesting unit 464.

The input job requesting unit 461 obtains an input device set by the attendee in a setting screen described later and sends a request to execute an input job to the conference managing device 20.

The progress determining unit 462 determines whether the conference managing device 20 finished the input job and ended processing of the image data 2010. If the progress determining unit 462 determines that the conference managing device 20 finished the input job the attendee set processing, the progress determining unit 462 sends a request for processing to the processing requesting unit 463. In this case, if the progress determining unit 462 determines that processing is finished, the progress determining unit 462 sends a request for an output job to the output job requesting unit 464. If the attendee did not set processing, the progress determining unit 462 sends a request for an output job to the output job requesting unit 464.

If the progress determining unit 462 determines that the input job is finished, the processing requesting unit 463 sends a request for processing to the conference managing device 20.

If the progress determining unit 462 determines that the input job is finished or processing is finished, the output job requesting unit 464 sends a request for an output job to the conference managing device 20.

### <Operation procedure>

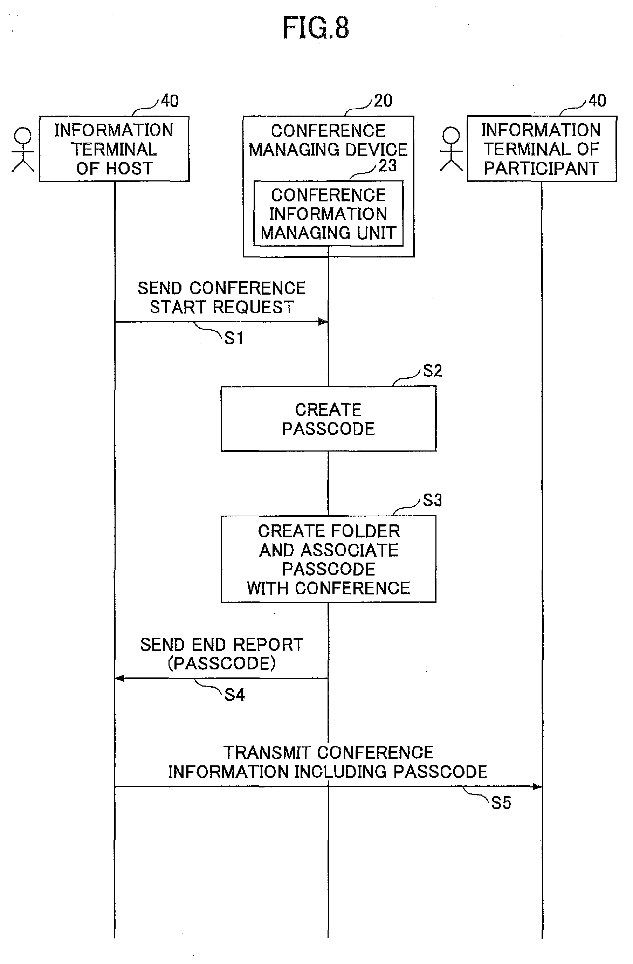

In the following, an operation when the communication system 100 holds a conference is described with reference to FIGs. 8 to 11. In the embodiment, terms of starting of a conference and holding of a conference are used to mean different operations.

### <<Starting of conference>>

FIG. 8 is a sequence diagram depicting a procedure by which a host sends a request to start a conference (issue a passcode) to the conference managing device 20 according to the embodiment of the present invention. The host accesses the conference managing device 20 in the conference room 6 or in proximity to the conference room 6.
S1: The host operates the information terminal 40 to send a request for a conference start to the conference managing device 20. The host can send a conference name and a conference location to the conference managing device 20.
S2: The transmitting and receiving unit 21 of the conference managing device 20 receives the request for a conference start and the conference information managing unit 23 assigns a conference ID and creates a passcode.
S3: The conference information managing unit 23 creates a folder, for example, where conference materials are stored, and registers the conference ID and the passcode in the passcode DB 2001.
S4: Then the conference information managing unit 23 transmits a report of an end of the conference start to the information terminal 40 of the host. The report includes at least the passcode.
S5: When the report of an end of registration is received, the host transmits a report of holding of the conference including the passcode to participants via electronic mail, for example. If the participant is present nearby, the host may orally report the passcode. The report of holding of the conference may include a conference name, a conference location, conference date and time, and the like. In addition, the conference managing device 20 may directly transmit the report of holding of the conference to the participants. Thereafter, the host prepares for the holding of the conference by registering conference materials in the conference materials DB 2002, for example.

### <<Participation of participant>>

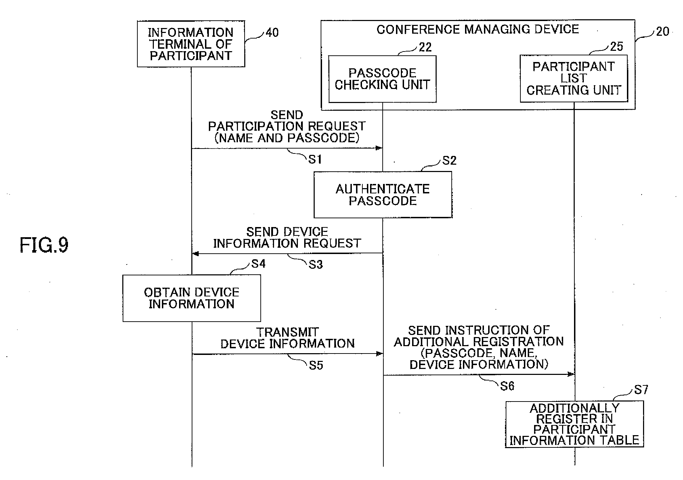

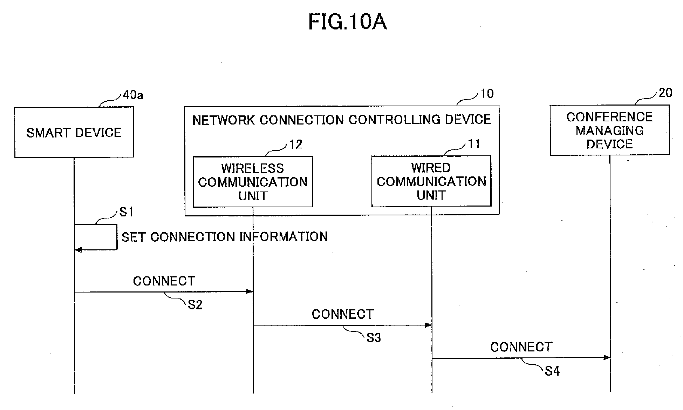

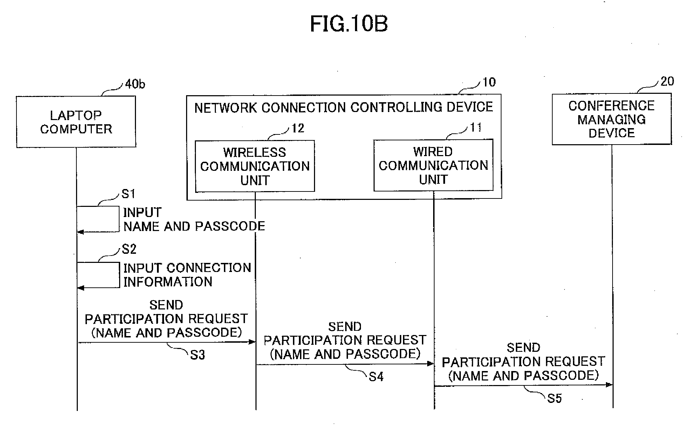

FIG. 9 is a sequence diagram depicting an operation performed by the conference managing device 20 when a participant participates in a conference according to the embodiment of the present invention. In FIG. 9, it is assumed that the information terminal 40 is a smart device 40a. A case where the information terminal 40 is a laptop computer 40b will be described later.
S1: The passcode transmitting unit 42 of the information terminal 40 sends a request to participate in the conference by transmitting its own name and the passcode transmitted by the host to the conference managing device 20 via the network connection controlling device 10. The participant sets the name and the passcode in the information terminal 40 in advance. The passcode transmitting unit 42 may directly transmit the name and the passcode to the conference managing device 20 without using the network connection controlling device 10. In the case of the smart device 40a, the smart device 40a transmits, via Bluetooth communication or the like, the name and the passcode to the network connection controlling device 10 upon approaching the network connection controlling device 10 within a predetermined distance. Further, along with the transmission of the name and the passcode, the connection information obtaining unit 43 of the smart device 40a obtains connection information
S2: When the name and the passcode are received, the passcode checking unit 22 of the conference managing device 20 authenticates the passcode associated with a conference ID in the passcode DB 2001. Alternatively, the passcode may be authenticated using a passcode of the host in the participant information table. In both cases, whether a corresponding passcode is present is determined.
S3: If there is a corresponding passcode, the passcode checking unit 22 sends a request for device information to the information terminal 40. The device information includes an IP address, a MAC address, a model number, a phone number of the user (information terminal 40), a mail address registered in the information terminal 40, and the like. In addition, the device information may be obtained after communication via a wireless LAN is established as illustrated in FIG 10.
S4: The storing and reading unit 49 of the information terminal 40 obtains the device information from the storage unit 4000. One method for obtaining the device information assigned to its own device is to use an Application Programming Interface (API) that obtains the device information, for example. The storing and reading unit 49 uses the API to obtain the device information.
S5: The transmitting and receiving unit 41 of the information terminal 40 transmits the device information to the conference managing device 20.
S6: When the device information is received, the passcode checking unit 22 of the conference managing device 20 sends an instruction of additional registration to the participant list creating unit 25. The instruction of additional registration includes the passcode and the name received in step S1 in addition to the device information. S7: The participant list creating unit 25 of the conference managing device 20 uses the passcode to identify the participant information table in which the host is registered and additionally registers the name of the participant permitted to participate, the passcode, and the device information in the participant information table of the conference. In this manner, participant information about each participant is registered in the participant information table.

After the holding of the conference described later, if the participant registered in the participant information DB 2004 sends, to the conference managing device 20, a request to access to a device or the conference materials DB 2002, the conference managing device 20 refers to the participant information DB 2004 and permits the access to the device or the conference materials DB 2002, for example. Accordingly, the participant registered in the participant information DB 2004 can select an input device and an output device illustrated in FIG. 1. «Connection to network connection controlling device 10»

FIG. 10A is a sequence diagram depicting a procedure by which the smart device 40a is connected to the network connection controlling device 10 according to the embodiment of the present invention.
S1: In the case of the smart device 40a, the authentication using the passcode has been finished and the connection information has been obtained. Accordingly, the smart device 40a sets the connection information in its own device.
S2: The transmitting and receiving unit 41 of the smart device 40a connects with the wireless communication unit 12 of the network connection controlling device 10.
S3: The wireless communication unit 12 of the network connection controlling device 10 sends a request for connection to the wired communication unit 11.
S4: The wired communication unit 11 of the network connection controlling device 10 connects with the conference managing device 20 by using the IP address or the like (connection information) specified by the smart device 40a.

FIG. 10B is a sequence diagram depicting a procedure by which the laptop computer 40b is connected to the network connection controlling device 10 according to the embodiment of the present invention.
S1: In the case of the laptop computer 40b without the short-distance wireless communication unit 615, the participant inputs the name and the passcode.
S2: The participant also inputs the connection information. Paper in which the connection information is described may be handed out to participants that use the conference room 6 or such paper may be put up in the conference room 6. In addition, the connection information to be set in this case may only include AP information. When the laptop computer 40b accesses the network connection controlling device 10 by using the AP information, the network connection controlling device 10 redirects the laptop computer 40b to the conference managing device 20.
S3: In the same manner as in step S1 in FIG. 9, the transmitting and receiving unit 41 of the laptop computer 40b transmits a participation request to the network connection controlling device 10 (communicates the participation request to the conference managing device 20 as a destination through the redirection).
S4: The wireless communication unit 12 of the network connection controlling device 10 sends the participation request to the wired communication unit 11.
S5: The wired communication unit 11 of the network connection controlling device 10 transmits the participation request to the conference managing device 20. Processing that follows this is the same as the processing from S2 in FIG. 9.

### <<Permission to hold conference>>

The host confirms a state of participation and holds a conference. It is possible to hold the conference even if there is no participant.

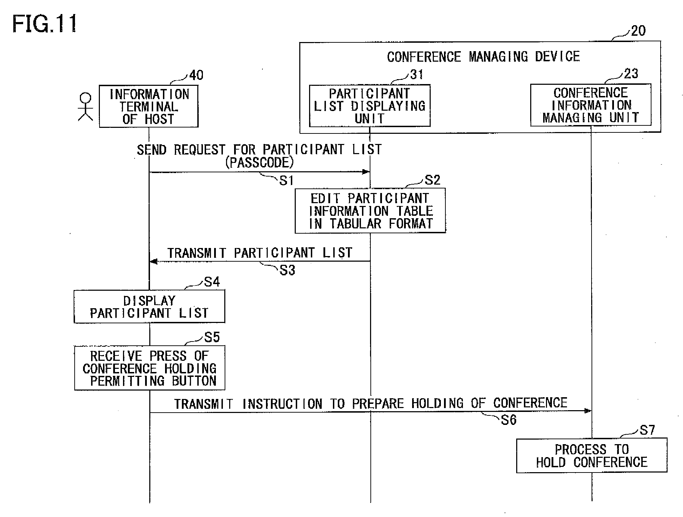

FIG. 11 is a sequence diagram depicting a procedure by which, after the participant participates in the conference, the host holds the conference according to the embodiment of the present invention.
S1: The host operates the information terminal 40 to send a request for a participant list to the conference managing device 20. Further, the information terminal 40 of the host transmits the passcode or the conference ID to identify the conference.
S2: The participant list displaying unit 31 of the conference managing device 20 uses the passcode or the conference ID to identify the participant information table and edits the identified participant information table in a tabular format to create screen information. In addition, the participant list displaying unit 31 creates appropriate screen information based on the model number of the information terminal 40 of the host. In other words, the appropriate screen information is created depending on a combination of an OS and an application or a combination of the OS and a browser. For example, the participant list displaying unit 31 creates the screen information for which description that can be interpreted by the application or the browser is selected and the size of the installed display screen 616 is considered.
S3: The participant list displaying unit 31 of the conference managing device 20 transmits the created screen information about the participant list to the information terminal 40 of the host.
S4: The display controlling unit 45 of the information terminal 40 displays the participant list on the display screen 616. On the display screen 616 of the information terminal 40, a participant list screen is displayed. The host can confirm the participants on the participant list screen.
S5: The operation input receiving unit 44 of the information terminal 40 receives an operation of the host. In other words, if the host confirms that persons that should participate in the conference are listed, the host determines that it is possible to hold the conference and presses a conference holding permitting button on the participant list screen. The operation input receiving unit 44 receives the operation. The information terminal 40 may determine that there is at least one participant and hold the conference.
S6: When the conference holding permitting button is pressed, the transmitting and receiving unit 41 of the information terminal 40 transmits an instruction to prepare holding of the conference to the conference information managing unit 23 of the conference managing device 20.
S7: When the conference information managing unit 23 of the conference managing device 20 receives the instruction to prepare holding of the conference, the conference information managing unit 23 performs a process necessary to hold the conference. Examples of the process necessary to hold the conference include permission of access to the folder of the conference materials to be used in the conference, permission of communication with a device, and the like.

### <Output of image>

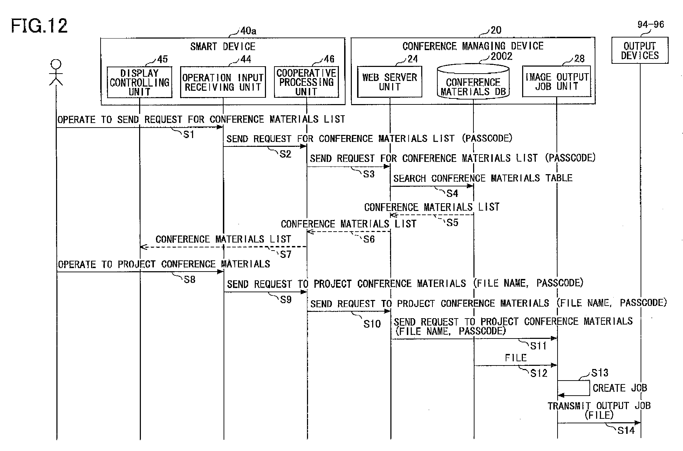

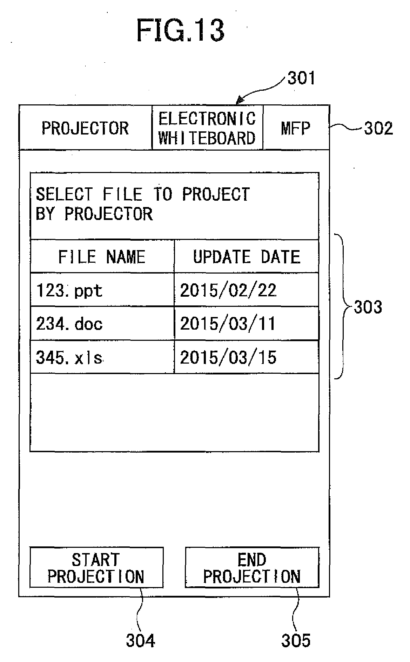

FIG. 12 is a sequence diagram depicting a procedure by which the smart device 40a causes the projector 95 to project conference materials according to the embodiment of the present invention.
S1: An attendee of a conference operates to send a request for a conference materials list.
S2: The operation input receiving unit 44 receives the operation and sends the request for the conference materials list along with a passcode to the cooperative processing unit 46. The passcode is information for identifying a conference in which the attendee participates and may be information capable of identifying the conference such as a conference ID. Because the conference is identified, if holding of the conference is permitted, the attendee can access conference materials.
S3: The cooperative processing unit 46 sends the request for the conference materials list with the passcode to the conference managing device 20.
S4: The Web server unit 24 of the conference managing device 20 searches the conference materials table associated with the passcode. It is possible to identify the conference ID based on the passcode.
S5: The Web server unit 24 reads out the conference materials list from the conference materials table.
S6: The Web server unit 24 transmits the conference materials list to the cooperative processing unit 46 of the smart device 40a.
S7: The cooperative processing unit 46 sends the conference materials list to the display controlling unit 45. In accordance with this, a conference materials list screen 301 as illustrated in FIG. 13 is displayed.
S8: The attendee selects a conference material (file mane) to project and performs an operation to execute the projection.
S9: The operation input receiving unit 44 receives the operation and sends a request to project a conference material with the passcode and the file name to the cooperative processing unit 46.
S10: The cooperative processing unit 46 transmits the request to project the conference material with the passcode and the file name to the conference managing device 20.
S 11: The Web server unit 24 of the conference managing device 20 sends the request to project the conference material to the image output job unit 28.
S12: The image output job unit 28 reads out a file specified with the file name from the conference materials DB 2002.
S13: The image output job unit 28 creates an output job for projection.
S14: The image output job unit 28 transmits the output job to the output device (projector 95).

In accordance with this, an image is projected. While the projector 95 is used as an example in FIG. 12, display performed by the electronic whiteboard 96 or printing performed by the MFP 94 are executed in a similar procedure.

### «Conference materials list screen»

FIG. 13 is a diagram depicting the conference materials list screen 301 according to the embodiment of the present invention. The conference materials list screen 301 includes a device selection tab field 302, a conference materials list field 303, a projection start button 304, and a projection end button 305. In the device selection tab field 302, output devices are displayed in tabs. The attendee can select the output device from the tabs. The output devices displayed in the tabs are read out from the device information DB 2003 and transmitted to the smart device 40a by the conference managing device 20. In the conference materials list field 303, a list of conference materials is displayed. The attendee selects a file to project. The projection start button 304 is a button to execute projection of the file selected by the attendee. The projection end button 305 is a button to end the projection.

### <Cooperation between input device and output device>

In the following, a cooperative process of an input device and an output device is described. In addition, image data generated by the input device is not limited to conference materials and an image displayed by the input device into image data can be converted into image data.

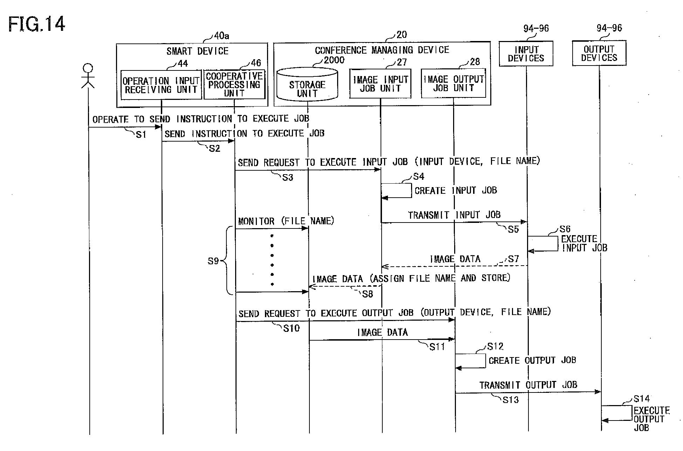

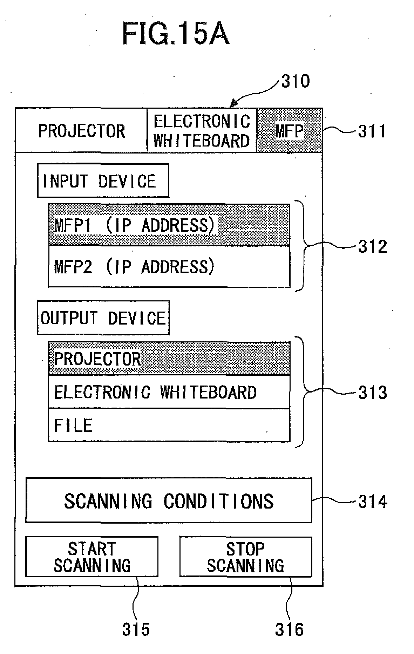

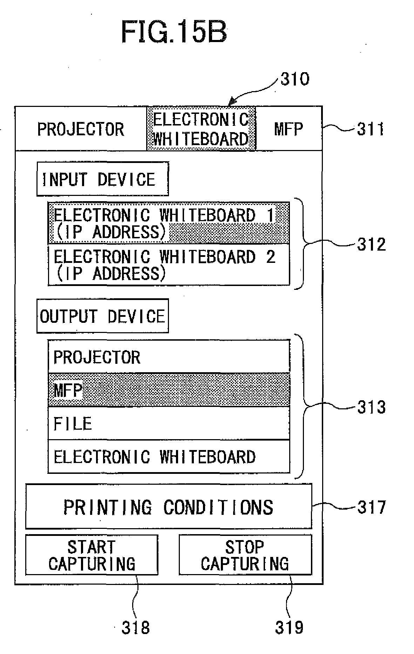

FIG. 14 is a sequence diagram depicting a procedure by which the attendee specifies the input device and the output device to execute a job according to the embodiment of the present invention.
S1: The attendee operates the smart device 40a to send an instruction to execute a job. Examples of screens are illustrated in FIGs. 15A and 15B. The instruction to execute may include at least the input device and the output device.
S2: the operation input receiving unit 44 sends an instruction to execute to the cooperative processing unit 46.
S3: The cooperative processing unit 46 sends a request to execute an input job and a request to execute an output job successively to the conference managing device 20. In other words, first, the input job requesting unit 461 sends a request for an input job to the conference managing device 20. Because the input job in the embodiment is for storing the image data 2010 by the input device, the input device may be specified for the input job. Further, the input job requesting unit 461 specifies a file name of the image data 2010 which is unique in the conference. A plurality of attendees may be present in the conference. Each attendee may execute a job using the input device and the output device. Further, the same attendee may execute jobs several times. Accordingly, an attendee ID + a job ID may be used for the file name, for example. Instead of the attendee ID, a MAC address or an IP address may be used. The job ID is information for identifying a job and may be represented by a sequential number starting from 1, for example. If the attendee ID is 001 and the job ID is J001, for example, the file name of the image data 2010 is "001_J001.Jpg." A folder (or directory) in which the image data 2010 is stored in the storage unit 2000 of conference managing device 20 is determined in advance. Alternatively, the cooperative processing unit 46 may specify the file name including a folder (namely, a path).
   Further, the input job requesting unit 461 may assign a random file name. If a random file name includes characters or numbers of a certain number or more, uniqueness in the conference will be secured.
   The input job requesting unit 461 transmits, to the image input job unit 27, the request to execute the input job including the input device and the file name determined in this manner.
   In addition, the file name may be assigned by the conference managing device 20. The conference managing device 20 assigns a file name such that a combination of an attendee and a job can be identified.
S4: The image input job unit 27 creates an input job that has the specified input device as an input source.
S5: the image input job unit 27 transmits the created input job to the input device.
S6: The input device executes the input job. In the embodiment, the image data 2010 is generated irrespective of the input device.
S7: The input device transmits the image data 2010 to the image input job unit 27.
S8: The image input job unit 27 assigns the file name specified in step S3 to the image data 2010 and stores the image data 2010 in the storage unit 2000. S9: After the request to execute the input job is sent, the progress determining unit 462 repeatedly sends an inquiry about whether the image data 2010 with a predetermined file mane is stored in the storage unit 2000 (polling). The progress determining unit 462 repeatedly sends, to the conference managing device 20, an inquiry about whether the image data 2010 with the file name assigned in step S3 is generated.
   Alternatively, because the smart device 40a and conference managing device 20 are in periodic communication, the conference managing device 20 may send a report that the image data 2010 is generated to the smart device 40a as a reply to this communication.
S10: When the image data 2010 is generated, the output job requesting unit 464 transmits a request to execute an output job including the output device and the file name to the image output job unit 28. The output device is identified by the output device and the image data 2010 is identified by the file name in the request, S11: The image output job unit 28 reads out the image data 2010 with the specified file name from the storage unit 2000.
S12, The image output job unit 28 creates an output job to output the image data 2010 from the output device.
S13: The image output job unit 28 transmits the output job to the output device.
S14: The output device executes the output job. The image data 2010 generated by the input device is output depending on the output device. If the output device is the projector 95, the image data 2010 is projected. If the output device is the electronic whiteboard 96, the image data 2010 is displayed. And if the output device is the MFP 94, the image data 2010 is printed.

In this manner, according to the communication system 100 in the embodiment, the cooperative processing unit 46 assigns the file name, so that the attendee need not specify or be aware of the file name of the image data 2010. The cooperative processing unit 46 can specify at least the file name (and a storage location if necessary) of the image data 2010 for each attendee and a job, so that the user need not specify the file name upon outputting.

Further, as is clear from the sequence diagram of FIG. 14, the image input job unit 27 and the image output job unit 28 have an Application Programming Interface (API) that receives a request to execute an input job from the outside. The smart device 40a may transmit a request to execute a job separately to the image input job unit 27 and to the image output job unit 28 via the API. In accordance with this, when the smart device 40a sends a request to execute the input job and a request to execute the output job from the outside, functions of the image input job unit 27 and the image output job unit 28 require no modification or only a small modification.

### <<Setting screen for input and output jobs>>

FIGs. 15A and 15B are diagrams depicting a setting screen 310 for input and output jobs displayed on the smart device 40a according to the embodiment of the present invention. FIG. 15A illustrates the setting screen 310 for instructing scanning of a document by the MFP 94 and outputting the document to the projector 95 in a single setting. The setting screen 310 includes a tab field 311, an input device selection field 312, an output device selection field 313, a scanning condition field 314, a scanning start button 315, and a scanning stop button 316.
- In the tab field 311, tabs for selecting an input device are displayed.
- In the input device selection field 312, at least one input device (MFP 94 in FIG. 15A) is displayed in a selectable manner. Because the MFP 94 is selected in the tab field 311, only the MFP 94 is displayed in the input device selection field 312. If there is only one MFP 94 available to the attendee, only one input device is displayed in the input device selection field 312.
- In the output device selection field 313, at least one output device is displayed in a selectable manner. Output devices suitable if the input device is the MFP 94 are displayed. In FIG. 15A, the projector 95, the electronic whiteboard 96, and a file are displayed, for example.
- In the scanning condition field 314, scanning conditions are displayed. The device information table is transmitted to the information terminal 40, so that the attendee can set scanning conditions from those scanning conditions that can be set in the MFP 94.
- The scanning start button 315 is a button to cause the MFP 94 to start scanning (start execution of an input job and an output job). In addition, before pressing the scanning start button 315, the attendee places the document on an Auto Document Feeder (ADF) or the like of the MFP 94.
- The scanning stop button 316 is a button to stop the scanning.

Accordingly, depending on an output device selected by the attendee, the image data 2010 is processed by one of the following combinations. MFP and Projector: an image scanned by the MFP 94 is projected by the projector 95. MFP and Electronic whiteboard: an image scanned by the MFP 94 is displayed by the electronic whiteboard 96. MFP and File: an image scanned by the MFP 94 is saved in a file.

As illustrated in FIG. 15A, the attendee can set the input device and the output device in a single setting screen 310. It is not necessary to specify a file created by the input device (MFP 94) by scanning and transmit the file to the output device for output in comparison with the related art.

FIG. 15B illustrates the setting screen 310 for instructing printing of a screen by the MFP 94, the screen being displayed by the electronic whiteboard 96, in a single setting. The configuration of the setting screen 310 is the same as in FIG. 15A, so that a difference is described.
- Because the electronic whiteboard 96 is selected in the tab field 311, only the electronic whiteboard 96 is displayed in the input device selection field 312. If there is only one electronic whiteboard 96 available to the attendee, only one input device is displayed in the input device selection field 312.
- In the output device selection field 313, at least one output device is displayed in a selectable manner. Output devices suitable if the input device is the electronic whiteboard 96 are displayed. In FIG. 15B, the projector 95, the MFP 94, a file, and the electronic whiteboard 96 are displayed, for example. The electronic whiteboard 96 is displayed in the output device selection field 313, so that if there are two electronic whiteboards 96 or more, a screen being displayed on a first electronic whiteboard can be displayed on a second electronic whiteboard.
- In a printing condition field 317, printing conditions are displayed. The device information table is transmitted to the information terminal 40, so that the attendee can set printing conditions from those printing conditions that can be set in the MFP 94. If the MFP 94 is selected in the output device selection field 313, the printing conditions are displayed.
- A capturing start button 318 is a button to cause the electronic whiteboard 96 to capture the screen (start execution of an input job and an output job).
- A capturing stop button 319 is a button to stop the capturing of the screen.

Accordingly, depending on an output device selected by the attendee, the image data 2010 is processed by one of the following combinations. Electronic whiteboard and Projector: a screen displayed by the electronic whiteboard 96 is projected by the projector 95.
Electronic whiteboard and MFP: a screen displayed by the electronic whiteboard 96 is printed by the MFP 94.
Electronic whiteboard and File: a screen displayed by the electronic whiteboard 96 is saved in a file.
Electronic whiteboard and Electronic whiteboard: a screen displayed by the first electronic whiteboard is displayed by the second electronic whiteboard.

According to the setting screen 310 in FIG. 15B, it is not necessary to capture a screen displayed by the electronic whiteboard 96 to save the captured screen in a file or the like and transmit the file to the output device for output in comparison with the related art.

### <<If information terminal executes browser software>>

If the information terminal 40 executes browser software instead of an application, the browser software may be difficult to implement functions of the cooperative processing unit 46. Accordingly, if the information terminal 40 executes the browser software, the conference managing device 20 provides the functions of the cooperative processing unit 46. For convenience sake of description, it is assumed that the information terminal 40 is the laptop computer 40b. However, the browser software may operate on the smart device 40a.

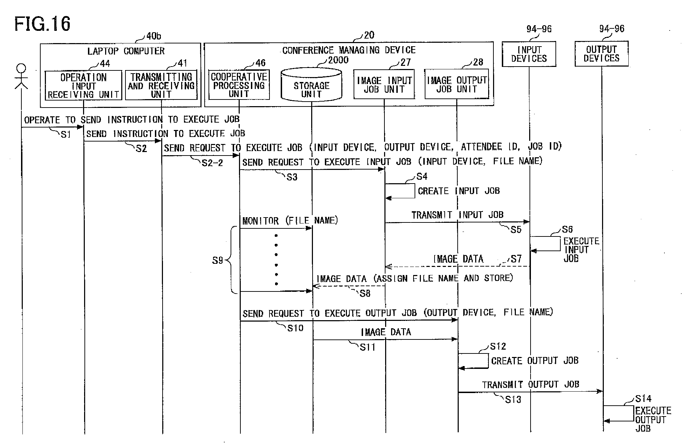

FIG. 16 is a sequence diagram depicting a procedure by which the attendee specifies the input device and the output device to execute a job according to the embodiment of the present invention. In FIG. 16, a difference from FIG. 14 is mainly illustrated.
S2-2: The transmitting and receiving unit 41 of the laptop computer 40b transmits a request to execute a job to the conference managing device 20. The transmitting and receiving unit 21 of the conference managing device 20 receives the request to execute the job. This request to execute the job includes an input device, an output device, an attendee ID, and a job ID, for example. The attendee ID may be specified by the cooperative processing unit 46 of the conference managing device 20 from an IP address or a MAC address of the laptop computer 40b. Further, the cooperative processing unit 46 of the conference managing device 20 may assign the job ID.

The subsequent processes are the same as in FIG. 14. In the sequence diagram of FIG. 16, the cooperative processing unit 46 monitors whether the image data 2010 is generated in the conference managing device 20, so that processing load of the laptop computer 40b can be reduced. Further, even if the information terminal 40 does not have an application, it is possible to execute the input job and the output job without modification or only a small modification in the image input job unit 27 and the image output job unit 28.

### <If image data is processed>

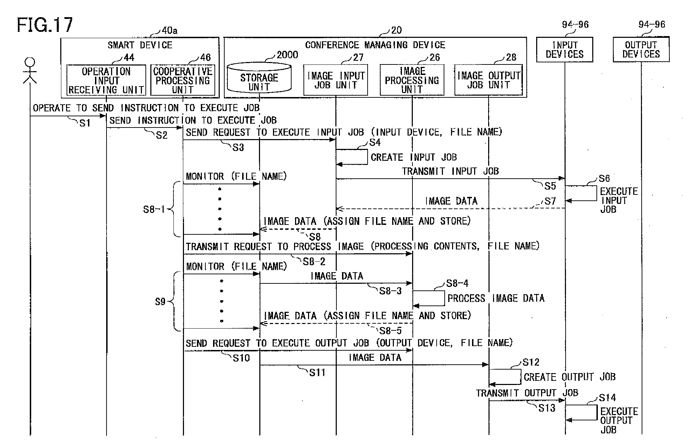

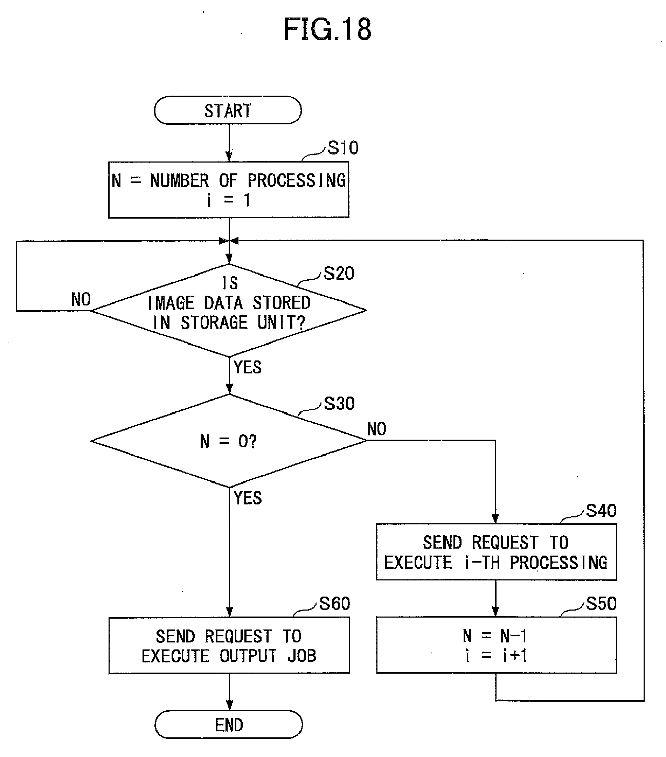

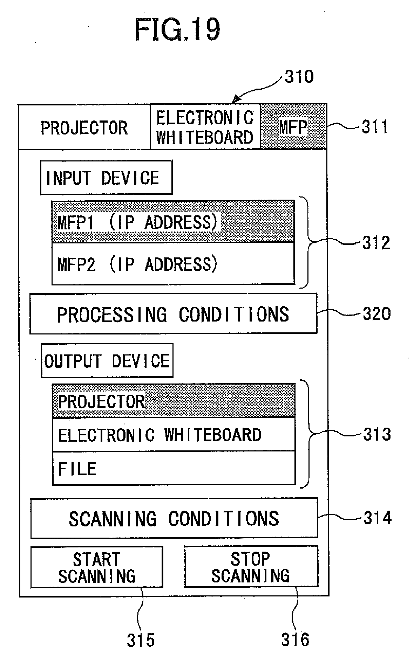

In the following, a process procedure by which the conference managing device 20 processes the image data 2010 of the input device before the image data 2010 is output by the output device is described with reference to FIG. 17. In FIG. 17, a difference from FIG. 14 is mainly illustrated. Further, FIG. 18 depicts a process procedure of the progress determining unit 462 according to the embodiment of the present invention. FIG. 19 depicts the setting screen 310 capable of setting processing. Processes in steps S1 to S8 are the same as in FIG. 14.
S8-1: The progress determining unit 462 repeatedly sends an inquiry about whether the image data 2010 with a file name assigned in step S3 is stored in the storage unit 2000 (polling).
S8-2: When the image data 2010 is generated, the processing requesting unit 463 transmits a request to process an image including processing contents and the file name to the image processing unit 26. A process in this step S8-2 is illustrated in FIG. 18. Processing is specified in accordance with the processing contents and the image data 2010 is identified by the file name.
S8-3: The image processing unit 26 reads out the image data 2010 with the specified file name from the storage unit 2000.
S8-4: The image processing unit 26 processes the image data 2010.
S8-5: The image processing unit 26 stores the processed image data 2010 in the storage unit 2000. A file name may be the same as specified in step S3. Processes from step S9 may be the same as in FIG. 14.

According to the processes as in FIG. 17, it is possible to process the image data 2010 generated by the input device and then output the processed image data 2010 from the output device. In this case, the user need not assign or be aware of the file name either. Further, the conference managing device 20 can perform a plurality of sets of processes.

### «Process by cooperative processing unit»

In FIG. 17, the cooperative processing unit 46 is required to determine whether to process the image data 2010 stored in the storage unit 2000 or execute an output job. Further, if the plurality of sets of processes are to be performed, it is necessary to determine progress of the processing in the sets of processes.

FIG. 18 is a flowchart illustrating the process in step S8-2 of FIG. 17. The process in FIG. 18 starts upon monitoring the image data 2010 in storage unit 2000.

The progress determining unit 462 sets a number of processes for N as an initial process and sets 1 for i (S10).

Then, the progress determining unit 462 determines whether the image data 2010 is stored in the storage unit 2000 (S20). As mentioned above, the progress determining unit 462 continues the monitoring until the image data 2010 is stored in the storage unit 2000.

If the determination of step S20 is Yes, the progress determining unit 462 determines whether N = 0 (S30). In other words, the progress determining unit 462 determines whether no processing is present or all sets of processes are finished.

If the determination of step S30 is Yes, the output job requesting unit 464 sends a request to execute an output job to the conference managing device 20 (S60).

If the determination of step S30 is No, processing is not finished. Accordingly, the progress determining unit 462 sends a request to execute an i-th process to the conference managing device 20 (S40).

The progress determining unit 462 reduces N by one and increases i by one (S50). In accordance with this, the number of processes is counted based on i. Then the process returns to step S20 and when all the sets of processes are finished, the process ends through step S60.

According to such a process, the conference managing device 20 may store the image data 2010 in the storage unit 2000 and the smart device 40a can execute an appropriate process each time the image data 2010 is stored in the storage unit 2000. Accordingly, limitation on the number of processes is eliminated and the image input job unit 27, the image output job unit 28, and the image processing unit 26 of the conference managing device 20 requires no modification or only a small modification.

### <<Setting screen capable of setting processing>>

FIG. 19 is a diagram depicting the setting screen 310 by which an attendee can set processing. In FIG. 19, a difference from FIG. 15 is illustrated. The setting screen 310 of FIG. 19 includes a processing condition field 320. While examples of processing conditions include an OCR process and a translation process, processing that can be performed on the image data 2010 may be set. Examples of such processing include an enlargement process, a reduction process, and trimming.

Accordingly, the attendee can set an input job, processing, and an output job in a single screen.

### <Other application examples>

As mentioned above, the best mode to carry out the present invention is described using examples. However, the present invention is not limited at all to these examples. It is possible to add various types of modifications and replacements within the scope of the present invention.

For example, in the embodiment, image data generated by the input device is output by the output device. However, data generated by the input device may not be the image data or data to be processed by the output device may not be the image data.

Further, the configuration as illustrated in FIG. 6, for example, is divided based on main functions in order to facilitate understanding of processes performed by the conference managing device 20, the smart device 40a, the laptop computer 40b, and the network connection controlling device 10. The present invention is not limited by how a process unit is divided or a name. It is possible to divide the processes of the conference managing device 20, the smart device 40a, the laptop computer 40b, and the network connection controlling device 10 into more process units depending on a specific process. Further, it is possible to divide one process unit to include more processes.

Further, various types of databases stored in the storage unit 2000 and various types of databases stored in the storage unit 1000 in FIG. 6 may be present on one of the conference network 92 and the shared network 91.

A plurality of conference managing devices 20 or a plurality of network connection controlling devices 10 may be present. Functions of the conference managing device 20 or the network connection controlling device 10 may be dispersed and disposed in a plurality of servers.

Further, the input job is an example of an input process and the output job is an example of an output process. The input job requesting unit 461 is an example of an input process requesting unit and the output job requesting unit 464 is an example of an output process requesting unit. The progress determining unit 462 is an example of a determination unit, the processing requesting unit 463 is an example of a processing requesting unit, and the cooperative processing unit 46 is an example of an obtaining unit. The operation input receiving unit 44 is an example of a reception unit or an input device requesting unit. The image output job unit 28 is an example of an output device requesting unit. The conference managing device 20 is an example of a conference information processing device. The file name is an example of identification information. And the transmitting and receiving unit 21 is an example of a reception portion.

Further, the present invention is not limited to these embodiments, and various variations and modifications may be made without departing from the scope of the present invention.

## Claims

1. A non-transitory recording medium storing a computer-readable program that, when executed by an information terminal in communication with a conference information processing device, causes the information terminal to function as:
a reception unit configured to receive an instruction to select an input device and an output device, the reception unit being able to select the input device and the output device registered in advance in the conference information processing device;
an input process requesting unit configured to send, to the conference information processing device, a request to execute an input process by the input device selected in the reception unit;
a determination unit configured to determine whether the conference information processing device receives data generated upon the execution of the input process by the input device; and
an output process requesting unit configured to send, to the conference information processing device, a request to execute an output process by the output device selected in the reception unit in response to the determination that the conference information processing device receives the data.

2. The non-transitory recording medium according to claim 1,
wherein the input process requesting unit specifies identification information about the data and sends the request to execute the input process, together with the specified identification information, to the conference information processing device, the specified identification information being unique among information terminals in communication with the conference information processing device, and
wherein the determination unit determines that the conference information processing device receives the data upon detecting that the data having the specified identification information is stored in the conference information processing device.

3. The non-transitory recording medium according to claim 1,
wherein in a case where the input process requesting unit sends the request to execute the input process to the conference information processing device, the determination unit repeatedly sends an inquiry about whether the execution of the input process is finished to the conference information processing device and determines that the conference information processing device receives the data in response to a reply from the conference information processing device that the data is received.

4. The non-transitory recording medium according to claim 1,
wherein in a case where the input process requesting unit sends the request to execute the input process to the conference information processing device, the determination unit determines that the conference information processing device receives the data in response to a report that the data is received, the report being transmitted from the conference information processing device.

5. The non-transitory recording medium according to claim 1, wherein the program further causes the information terminal to function as:
a processing requesting unit configured to send, in a case where the reception unit receives an instruction to perform a process on the data, a request for the process to the conference information processing device before the output process requesting unit sends, to the conference information processing device, the request to execute the output process by the output device.

6. The non-transitory recording medium according to claim 5,
wherein the processing requesting unit specifies identification information about the data and sends the request for the process, together with the specified identification information, to the conference information processing device, the specified identification information being unique among information terminals in communication with the conference information processing device,
wherein the determination unit counts a number of times the conference information processing device stores the data having the specified identification information and determines whether the conference information processing device finishes all of steps of the process received by the reception unit, and
wherein in a case where the conference information processing device finishes all of the steps of the process, the output process requesting unit sends, to the conference information processing device, the request to execute the output process by the output device.

7. The non-transitory recording medium according to claim 1,
wherein the data generated upon the execution of the input process by the input device is image data obtained through scanning a document by a scanner device serving as the input device, and
wherein the output process requesting unit sends, to the conference information processing device, a request to project the image data by a projector serving as the output device or a request to display the image data by an electronic whiteboard serving as the output device.

8. The non-transitory recording medium according to claim 1,
wherein the data generated upon the execution of the input process by the input device is image data obtained through capturing a screen displayed by a first electronic whiteboard serving as the input device, and
wherein the output process requesting unit sends, to the conference information processing device, a request to project the image data by a projector serving as the output device, a request to print the image data by a printer serving as the output device, or a request to display the image data by a second electronic whiteboard serving as the output device.

9. An information terminal for communication with a conference information processing device, the information terminal comprising:
a reception unit configured to receive an instruction to select an input device and an output device, the reception unit being able to select the input device and the output device registered in advance in the conference information processing device;
an input process requesting unit configured to send, to the conference information processing device, a request to execute an input process by the input device selected in the reception unit;
a determination unit configured to determine whether the conference information processing device receives data generated upon the execution of the input process by the input device; and
an output process requesting unit configured to send, to the conference information processing device, a request to execute an output process by the output device selected in the reception unit in response to the determination that the conference information processing device receives the data.

10. The information terminal according to claim 9,
wherein the input process requesting unit specifies identification information about the data and sends the request to execute the input process, together with the specified identification information, to the conference information processing device, the specified identification information being unique among information terminals in communication with the conference information processing device, and
wherein the determination unit determines that the conference information processing device receives the data upon detecting that the data having the specified identification information is stored in the conference information processing device.

11. The information terminal according to claim 9,
wherein in a case where the input process requesting unit sends the request to execute the input process to the conference information processing device, the determination unit repeatedly sends an inquiry about whether the execution of the input process is finished to the conference information processing device and determines that the conference information processing device receives the data in response to a reply from the conference information processing device that the data is received.

12. The information terminal according to claim 9,
wherein in a case where the input process requesting unit sends the request to execute the input process to the conference information processing device, the determination unit determines that the conference information processing device receives the data in response to a report that the data is received, the report being transmitted from the conference information processing device.

13. The information terminal according to claim 9, further comprising:
a processing requesting unit configured to send, in a case where the reception unit receives an instruction to perform a process on the data, a request for the process to the conference information processing device before the output process requesting unit sends, to the conference information processing device, the request to execute the output process by the output device.

14. The information terminal according to claim 13,
wherein the processing requesting unit specifies identification information about the data and sends the request for the process, together with the specified identification information, to the conference information processing device, the specified identification information being unique among information terminals in communication with the conference information processing device,
wherein the determination unit counts a number of times the conference information processing device stores the data having the specified identification information and determines whether the conference information processing device finishes all of steps of the process received by the reception unit, and
wherein in a case where the conference information processing device finishes all of the steps of the process, the output process requesting unit sends, to the conference information processing device, the request to execute the output process by the output device.

15. A communication system in which an information terminal is in communication with a conference information processing device, the communication system comprising:
a reception unit configured to receive an instruction to select an input device and an output device, the reception unit being able to select the input device and the output device registered in advance in the conference information processing device;
an input process requesting unit configured to send, to the conference information processing device, a request to execute an input process by the input device selected in the reception unit;
a determination unit configured to determine whether the conference information processing device receives data generated upon the execution of the input process by the input device; and
an output process requesting unit configured to send, to the conference information processing device, a request to execute an output process by the output device selected in the reception unit in response to the determination that the conference information processing device receives the data.
